# EUROPEAN PATENT APPLICATION

(11) **EP 4 398 626 A1**
(43) Date of publication of application: **10.07.2024**
(21) Application number: 23216620.7
(22) Date of filing: 14.12.2023
(51) Int. Cl.: H04W 24/02, H04W 88/12

(54) **EVENT TRIGGERING BASED ON EXPLICIT USER EQUIPMENT LIST ASSIGNMENT COMMAND EVENTS**

(30) Priority: 05.01.2023 FI 20235019
(71) Applicant: Nokia Solutions and Networks Oy, 02610 Espoo (FI)
(72) Inventor: ROUT, Bivudendu Pratap, 560077 Bangalore (IN); URIE, Alistair, 92130 Issy les Moulineaux (FR); AGARWAL, Salil, 560037 Bangalore (IN)
(74) Representative: Nokia EPO representatives

(57) **Abstract**

Event triggering based on explicit user equipment list assignment command events is provided. A method may be performed by a network device of initiating a radio intelligent controller subscription procedure to modify a policy of a user device to change at least an operation of the user device, when determining that the user device is underperforming. The network device transmits to a network node a request to change at least the operation of the user device according to the radio intelligent controller subscription procedure.

## Description

### TECHNICAL FIELD:

Some example embodiments may generally relate to mobile or wireless telecommunication systems, such as Long Term Evolution (LTE) or fifth generation (5G) new radio (NR) access technology, or 5G beyond, or other communications systems. For example, certain example embodiments may relate to event triggering based on explicit user equipment (UE) list assignment command events.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. Fifth generation (5G) wireless systems refer to the next generation (NG) of radio systems and network architecture. 5G network technology is mostly based on new radio (NR) technology, but the 5G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

### SUMMARY:

Various exemplary embodiments may provide a method including initiating, by a network device, a radio intelligent controller subscription procedure to modify a policy of a user device to change at least an operation of the user device. The method may also include providing, by the network device to a network node, a request to change at least the operation of the user device according to the radio intelligent controller subscription procedure.

Some exemplary embodiments may provide a method including providing, to a network device from a network node, at least one measurement report comprising performance measurements of a user device. The method may also include receiving, from the network device, a request to modify a policy of the user device to change at least an operation of the user device based on the measurement report, and modifying the policy and executing the modified policy to change a performance of the user device.

Certain exemplary embodiments may provide an apparatus including at least one processor and at least one memory. The memory may store instructions that, when executed by the at least one processor, cause the apparatus at least to initiate a radio intelligent controller subscription procedure to modify a policy of a user device to change at least an operation of the user device. The apparatus may also be caused to provide, to a network node, a request to change at least the operation of the user device according to the radio intelligent controller subscription procedure.

Various exemplary embodiments may provide an apparatus including at least one processor and at least one memory. The memory may store instructions that, when executed by the at least one processor, cause the apparatus at least to provide, to a network device, at least one measurement report comprising performance measurements of a user device. The apparatus may also be caused to receive, from the network device, a request to modify a policy of the user device to change at least an operation of the user device based on the measurement report, and modify the policy and executing the modified policy to change a performance of the user device.

### BRIEF DESCRIPTION OF THE DRAWINGS:

For proper understanding of example embodiments, reference should be made to the accompanying drawings, as follows:
FIG. 1 illustrates an exemplary table of definitions for a radio intelligent controller (RIC) event trigger definitions;
FIG. 2 illustrates an exemplary table of explicit user equipment (UE) list assignment commands according to various exemplary embodiments;
FIG. 3 illustrates an example of a signal flow according to certain exemplary embodiments;
FIG. 4 illustrates an example of a flow diagram of a method according to various exemplary embodiments;
FIG. 5 illustrates another example of a flow diagram of a method according to some exemplary embodiments; and
FIG. 6 illustrates a set of apparatuses according to various exemplary embodiments.

### DETAILED DESCRIPTION:

It will be readily understood that the components of certain example embodiments, as generally described and illustrated in the figures herein, may be arranged and designed in a wide variety of different configurations. The following is a detailed description of some exemplary embodiments of systems, methods, apparatuses, and non-transitory computer program products for event triggering based on explicit UE list assignment command events. Although the devices discussed below and shown in the figures refer to Next Generation NodeB (gNB) devices and UE devices, this disclosure is not limited to gNBs and UEs.

5G wireless systems may provide an open radio access network (O-RAN) architecture that extends the functionality of 3GPP defined mobile networks. The O-RAN architecture may include a non-realtime (RT) RAN intelligent controller (non-RT RIC) that may provide a new O-RAN defined A1 interface, and a near-RT RAN intelligent controller that may provide a function of terminating the A1 interface from a service management and orchestration (SMO) system layer. The near-RT RIC may provide an O-RAN defined E2 interface towards the RAN, which provides a means for interconnecting a near-RT RIC and an E2 node. An E2 application protocol (E2AP) may support the functions of the E2 interface by signaling procedures defined in the O-RAN. There may be a single E2 interface on a centralized unit-control plane (CU-CP) for the entire RAN, or individual E2 interfaces on each RAN component. The near-RT RIC may be deployed in a mobile network as either a standalone network function, or may be deployed co-located with the one or more RAN components as an integrated solution, for example, as a combined near-RT RIC and CU-CP.

Related services of the near-RT RIC may be provided over the E2 interface and may be classified into four classes: REPORT, INSERT, CONTROL, and POLICY. REPORT (RAN>RIC) may be defined as the RAN configured to REPORT to the RIC information obtained by a specified trigger event. INSERT (RAN>RIC) may be defined as the RAN configured to suspend a normally autonomous process during a specified trigger event, and to forward the current state to the RIC for subsequent processing. CONTROL (RIC>RAN) may be defined as the RIC may send a control message to initiate a process in the RAN from a specialized state, such as for a specified UE within a particular group of UEs, and may be used as either a response to INSERT or autonomously. POLICY (RIC>RAN) may be defined as the RAN configured to modify a normal RAN response to a specified trigger event within a specified procedure according to a specific policy or rule.

An RIC subscription procedure may be implemented in which after each occurrence of a defined RIC event trigger, the E2 node may send a REPORT message to the near-RT RIC, and the associated procedure may continue in the E2 node. The RIC subscription procedure may continue and/or repeat until the subscription is ended or deleted. The E2 node may detect the RIC event trigger, and thereafter the E2 node may send the near-RT RIC an RIC indication including, for example, a request identification (ID), a secondary node (SN), and/or a report. The E2 node may continue the associated procedure instance. Thereafter, an RIC subscription delete procedure may be performed between the near-RT RIC and the E2 node.

Following the RIC subscription, after each occurrence of a defined RIC event trigger, such as the arrival of an incoming message on an interface, the E2 node may send an INSERT message to the RIC and suspend the associated procedure in the E2 node. The E2 node may detect the RIC event trigger and may suspend the associated procedure instance. The E2 node may start a wait timer and provide a RIC indication to the near-RT RIC. The near-RT RIC may then perform an action such as deciding whether or not to recommend that the E2 Node should accept or reject the incoming message, and may send an RIC control request to the E2 node accordingly. Upon receipt of the RIC control request, the E2 node may cancel the wait timer and resume the associated procedure instance, such as to either accept or reject the original incoming message that was previously sent to the near-RT RIC at the occurrence of the defined RIC event trigger. The E2 node may send a RIC control acknowledgment to the near-RT RIC and a RIC subscription delete procedure may be initiated between the near-RT RIC and the E2 node.

A control service of the RIC services may provide that the near-RT RIC may perform an action, such as make a decision to recommend that the E2 Node should initiate a new control plane mechanism, and/or make a decision to recommend that the E2 Node should accept or reject an incoming message in response to an insert RIC service. The near-RT RIC may send a RIC control request to the E2 node. The E2 node may initiate or resume the associated procedure instance, and may send a RIC control acknowledgment message to the near-RT RIC.

A policy service of the RIC subscription procedure may provide that during each occurrence of a defined RIC event trigger, the E2 node may modify an ongoing associated process according to the policy defined by the near-RT RIC in the RIC subscription procedure. The RIC subscription procedure between the near-RT RIC and the E2 node may be performed, and the E2 node may detect an RIC event trigger. As and when the RIC event trigger is detected, the E2 node may modify an ongoing associated process according to the received policy. The RIC subscription procedure may continue and/or repeat until the subscription is deleted, which may be performed by a subscription delete procedure between the near-RT RIC and the E2 node.

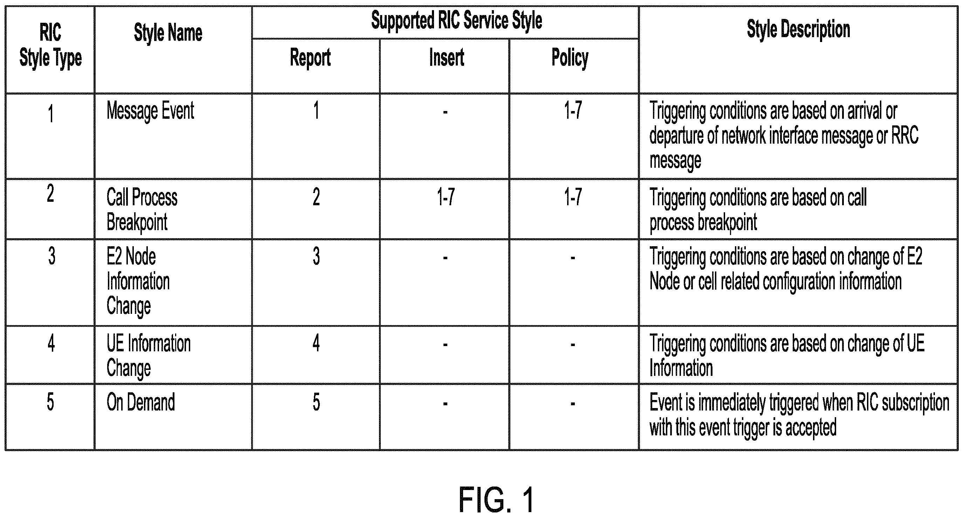

As illustrated in the table of FIG. 1, the RIC subscription procedure may establish the event trigger within a RAN function that initiates a sequence of actions for report, insert, control, and/or policy RIC services. As per E2GAP specification, the event trigger may be defined using a RAN Function specific E2SM (E2 Service Model). For example, using a latest version of E2SM-RCv01.03 (E2SM RAN Control), a policy service may be triggered to occur after either a message event or a call process breakpoint. This approach may be useful for RIC services that are executed at specific points within a call process, such as upon reception of a UE measurement report. The event trigger and/or the policy condition tests may include a criteria on whether or not a given UE is a member of an "Explicit UE List". UE membership to a given list may be controlled using a RIC Control procedure with, for example, an E2SM-RC Control service style 8/Action 1.

FIG. 1 illustrates an example of a report on UE information (REPORT style 4) triggered by the UE information change (Event Trigger style 4). For example, the event trigger may be conditional on membership to the explicit UE list and a particular UE may be added to the explicit UE list after the last defined UE information change event occurs. The near-RT RIC may then receive information on the UE after the next UE information change. This may result in an information gap between the time at which the UE is added to the target explicit UE list and the next time the UE information change event occurs.

Various exemplary embodiments may advantageously address the above-described considerations by advantageously providing for the current UE information to be reported at the time that the UE may be added to the target explicit UE list.

FIG. 1 also illustrates an example of a policy for radio bearer control (POLICY Style 1) triggered by a call processing breakpoint for bearer context management (Event Trigger style 2, call process type ID 2) used to modify one or more default data radio bearers (DRB) quality of service (QoS) configuration parameters during the handling of bearer context management signals. The policy RIC service may be conditional on UE membership to the explicit UE list with, for example, different policy actions applied to one or more UEs assigned to different explicit UE lists, such as to either increase or decrease a target DRB QoS configuration parameter. If the UE is assigned to a given explicit UE list after the target bearer context management event, then the UE would not have the same DRB QoS configuration as other UEs assigned to the same explicit UE list.

Various exemplary embodiments may advantageously address the above-described considerations by advantageously providing for the DRB QoS configuration to be altered at the time that the UE may be added to, or removed from, the target explicit UE list. Various exemplary embodiments discussed below may provide benefits in light of the considerations discussed above, such as defining a new event trigger style that triggers a sequence of RIC service actions at the time of explicit UE list assignment.

According certain exemplary embodiments, the near-RT RIC, which is part of the RAN, may be able to define an event trigger that would be used to initiate a sequence of RIC service actions, such as REPORT, INSERT, CONTROL, and/or POLICY, that may be executed at the E2 Node based on an explicit UE list assignment command event to add a UE and/or remove a UE. This new event trigger type may be used in parallel, for example simultaneously or within a same period of time, to an existing event trigger, such as a message event or a call process breakpoint. When multiple, two in this example, event triggers are required, then the near-RT RIC may send multiple (two) RIC subscriptions, one for the normal event trigger and a second for the explicit UE list assignment command event. Both RIC subscriptions may contain the same sequence of RIC service actions. However, the exemplary embodiments are not limited to this example. The RIC subscriptions may include overlapping or different information. Further, as an alternative, the explicit UE list assignment command event trigger may be used without a parallel normal event trigger, which may function similar to an RIC control service without the overhead of repeating the same, potentially large, control message for each UE.

The various exemplary embodiments may provide a new event trigger style, which may be referred to as an explicit UE list assignment command. In certain exemplary embodiments, the new event trigger may be installed or used within an explicit UE list handling process in a target RAN function. The event trigger may be used to initiate a sequence of RIC service actions, and may be defined, for example, within O-RAN WG3 E2SM-RC specification and used to trigger a sequence of RIC Service actions.

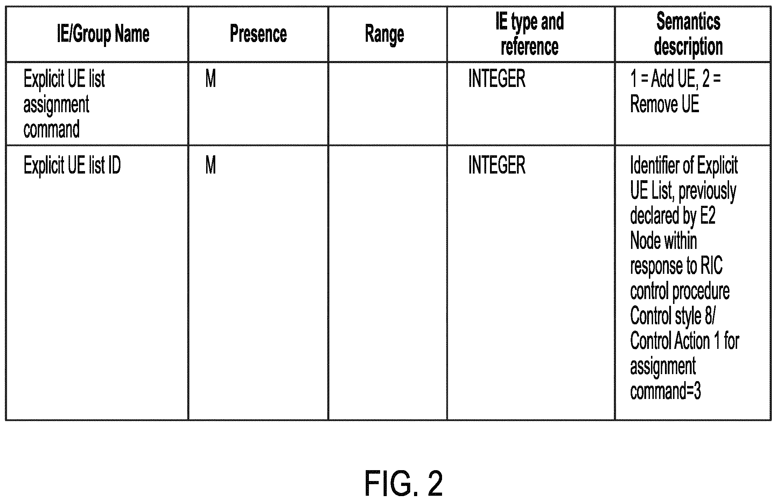

According to some exemplary embodiments, an RIC event trigger definition style may be used when the RIC sets a certain sequence of RIC service actions to be executed at an E2 Node based on an assignment command event, such as to add a UE and/or remove a UE, that may be added to a specific explicit UE list. FIG. 2 illustrates an example of an event trigger definition Format for the explicit UE list assignment command event, according to some exemplary embodiments.

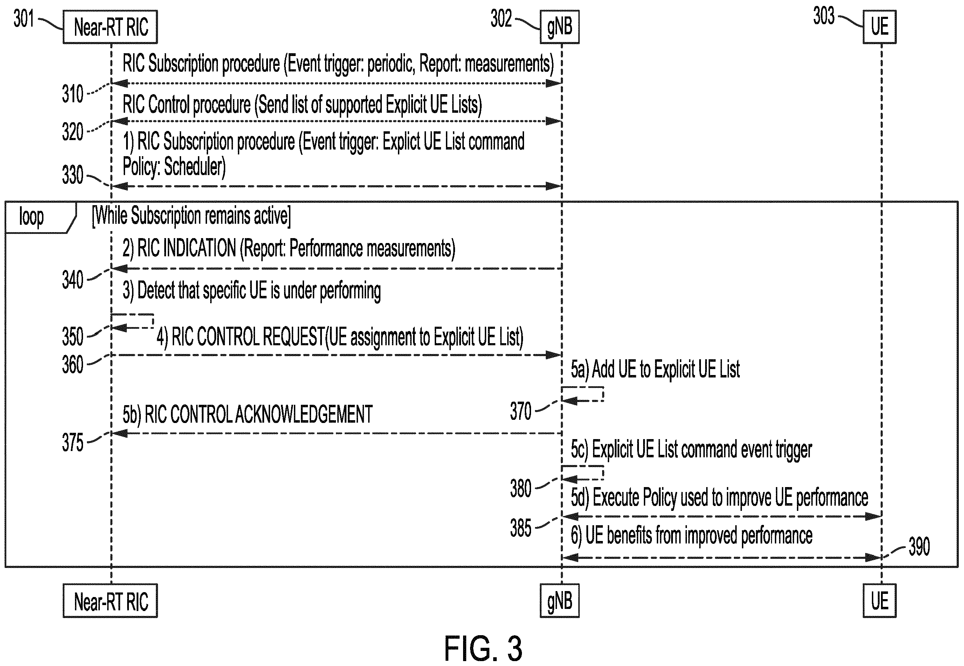

FIG. 3 illustrates a signal flow between the near-RT RIC 301, a gNB 302, and a UE 303 for handling the new evert trigger, according to various exemplary embodiments. At 310, the near-RT RIC 301 may establish an RIC subscription procedure between the near-RT RIC 301 and the gNB 302. The gNB 302 is not limited to a gNB, and instead may be any type of access node, base station, and/or network entity for the RAN. The RIC subscription procedure may set or define an event trigger, a reporting frequency, such as periodic, and/or a type of report, such as a measurement report, to be generated and provided.

At 320, the near-RT RIC 301 and/or the gNB 302 may perform an RIC control procedure in which a list of supported explicit UE lists are provided between the near-RT RIC 301 and the gNB 302. This procedure 320 may not be limited to an RIC control procedure and instead may be any type of RIC procedure or alternative mechanism including, but not limited to, a management configuration mechanism.

At 330, the near-RT RIC 301 may establish an RIC subscription for a policy to be triggered when and/or if a UE, such as UE 303, is added to a specific explicit UE list. The near-RT RIC 301 may set an RIC event trigger style for an explicit UE list assignment command event for an explicit UE list, and for an assignment command, such as add and/or remove. The explicit UE list may be MCS_255_QAM_UE_LIST1, which is defined by the associated modulation and coding scheme (MCS). The subscription may include an RIC service action policy used to modify scheduler behavior for the UE 303.

According to some exemplary embodiments, the following procedures 340-390 may be performed while the established RIC subscription remains active so as to function in parallel together. At 340, the near-RT RIC 301 may monitor a RAN performance by receiving RAN performance measurements from the gNB 302 in, for example, a measurement report.

At 350, the near-RT RIC 301 may determine or be informed that the UE 303, for example UE ID =1 11, is under performing and may decide to add the UE 303 to a list of UEs that are to benefit from a modified scheduler behavior, which may be the explicit UE list. An example of modified scheduler behavior may be when the near-RT RIC 301 decides that the UE 303 is far from the network and/or the UE 303 has more data to be transmitted, the near-RT RIC 301 may request that the RAN function to provide more scheduling weight and priority for the UE 303 over other UEs.

At 360, the near-RT RIC 301 initiates a corresponding RIC control procedure using, for example, Control style 8/Control Action 1 as defined in 3GPP standards, to add the UE 303 (UE ID = 111) to the explicit UE list, for example, MCS_255_QAM_UE_LIST1, for which the RIC subscription defined at 330 has an event trigger. In the RIC control procedure, the near-RT RIC 301 may send an RIC control request to the gNB 302 to request that the UE 303 be assigned or added to the explicit UE list.

At 370, the gNB 302, which may form part of the RAN, may receive the RIC control request from the near-RT RIC 301 to add/assign the UE 303 to the particular explicit UE list referred to as MCS_255_QAM_UE_LIST1. The gNB 302, may add or assign the UE 303 to the explicit UE list. For example, the RAN may add/assign that the UE 303 to the explicit UE list MCS_255_QAM_UE_LIST1, such as by adding a record to the corresponding UE context.

At 375, the gNB 302 may send an RIC control acknowledgement information or message back to the near-RT RIC 301. At 380, the gNB 302 may determine that the event trigger occurs, established by the RIC subscription at 310/330, by, for example, detecting that the UE 303 has been added to the explicit UE list for list MCS 255_QAM UE LIST1.

At 385, the sequence of RIC service actions, established by the RIC subscription at 310/330, may be initiated. The initiated sequence of RIC services may include the policy service that modifies scheduler behavior for the UE 303. The policy service that modifies scheduler behavior may improve the functioning of the UE 303 to improve the performance and prevent the UE 303 from not performing as required, as previously determined at 350. The UE 303 not performing as required may include, for example, the UE 303 underperforming, overperforming, and/or performing in any manner other than desired as compared to one or more target performance metrics.

At 390, the UE 303 functions according to modified operations and/or the modified scheduler behavior, which may occur immediately upon the UE 303 being added to the explicit UE list for list MCS_255_QAM_UE_LIST1. For example, as different MCS may be applied to different UEs based on the location of each UE, an improved quality of service (QoS) to the user will be provided dynamically and instantaneously. According to various exemplary embodiments, procedures 340-390 may be performed iteratively, in a loop, periodically, continuously and the like until the UE 303 is determined to no longer be not performing as required, such as not be underperforming, or the policy is ended or deleted. Once the UE 303 is determined to no longer be not performing as required or the policy is ended or deleted, the near-RT RIC 301 may perform an RIC event trigger to, for example, remove the UE 303 from the explicit UE list.

The various exemplary embodiments may advantageously implement the event trigger procedure described herein for the E2 Node to be able to execute an RIC policy at the E2 Node based on an assignment command event, such as, for example, adding a UE or removing the UE to/from an explicit UE list, rather than waiting for a message event/breakpoint event to occur.

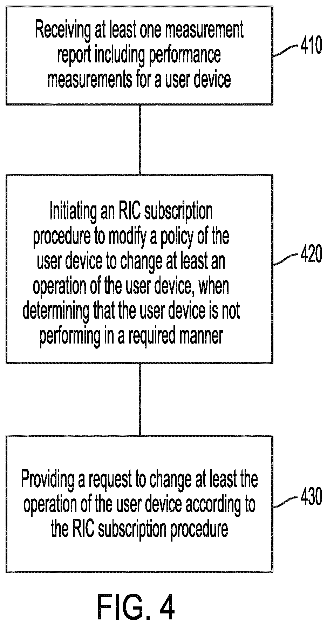

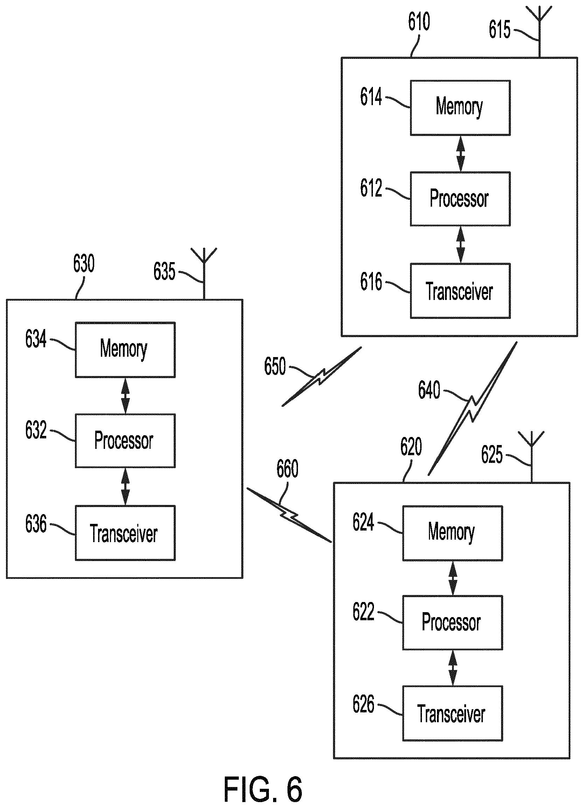

FIG. 4 illustrates an example flow diagram of a method, according to various exemplary embodiments. In an exemplary embodiment, the method of FIG. 4 may be performed by a network element, or a group of multiple network elements in a 3GPP system, such as LTE or 5G-NR. For instance, in an exemplary embodiment, the method of FIG. 4 may be performed by a network device, such as a near-RT RIC, similar to apparatus 610 illustrated in FIG. 6.

According to various exemplary embodiments, the method of FIG. 4 may include, at 410, receiving, by the apparatus 610 from a network node similar to an apparatus 620, at least one measurement report including performance measurements for the user device, which is similar to apparatus 630. At 420, the method may include initiating, by the apparatus 610, an RIC subscription procedure to modify a policy of the apparatus 630 to change at least an operation of the apparatus 630, when determining that the apparatus 630 is not performing as required, such as underperforming.

At 430, the method may further include providing, by the apparatus 610 to an apparatus 620, a request to change at least, for example, an operation of the apparatus 630, such as a scheduler operation, according to the RIC subscription procedure. The request may alternatively, or additionally, change one or more other operations aspects, such as handover, carrier aggregation configuration, and the like.

According to some exemplary embodiments, the RIC subscription procedure may be initiated when determining that the user device is not performing in a required manner, such as underperforming or overperforming.

According to various exemplary embodiments, the request may instruct the apparatus 620 to add the apparatus 630 to, or remove the apparatus 630 from, a list of devices to operate by modified operations.

According to certain exemplary embodiments, the method may further include receiving, by the apparatus 610 from the apparatus 620, at least one measurement report that may include performance measurements for the apparatus 630.

According to various exemplary embodiments, the RIC subscription procedure may be initiated in response to the performance measurements of the measurement report indicating that the apparatus 630 is not performing as required, such as underperforming or overperforming. The RIC subscription procedure may be iteratively performed until the apparatus 630 is removed from the list of devices to operate by modified operations and the apparatus 630 returns to a normal operation.

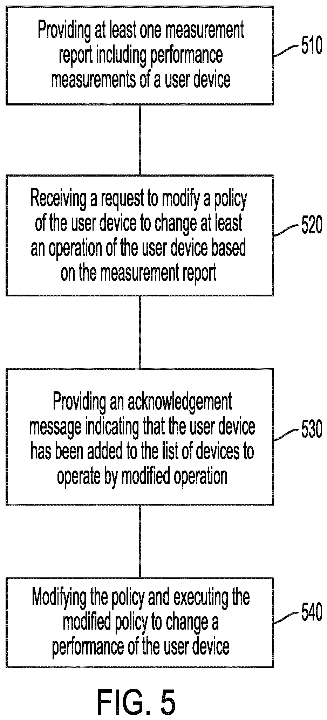

FIG. 5 illustrates an example flow diagram of a method, according to various exemplary embodiments. In an exemplary embodiment, the method of FIG. 5 may be performed by a network element, or a group of multiple network elements in a 3GPP system, such as LTE or 5G-NR. For instance, in an exemplary embodiment, the method of FIG. 5 may be performed by a network node similar to apparatus 620 illustrated in FIG. 6.

According to various exemplary embodiments, the method of FIG. 5 may include, at 510, providing, to a network device similar to apparatus 610 from the apparatus 620, at least one measurement report including performance measurements of a user device, which is similar to apparatus 630. At 520, the method may also include receiving, from the apparatus 610, a request to modify a policy of the apparatus 630 to change at least an operation of the apparatus 630 based on the measurement report.

At 530, the method of FIG. 5 may include providing, from the apparatus 620 to the apparatus 610, an acknowledgement message indicating that the apparatus 630 has been added to the list of devices to operate by modified operation. The method, at 540, may further include modifying the policy and executing the modified policy to change a performance of the apparatus 630.

According to various exemplary embodiments, the request may include instructions to the apparatus 620 to add the apparatus 630 to a list of devices to operate by modified operations. The modified policy may be executed until the apparatus 630 is removed from the list of devices to operate by modified operations and the apparatus 630 returns to a normal operation.

According to some exemplary embodiments, the modifying of the policy at 540 may include modifying the operation of the apparatus 630 to change the performance of the apparatus 630.

FIG. 6 illustrates apparatuses 610, 620, and 630 according to various exemplary embodiments. In the various exemplary embodiments, apparatus 610 may be a part of the RAN, a network entity or a sub-component or processing functions of a network entity of computation device connected to the network, such as a near-real time radio intelligent controller (RIC). For example, near-RT RIC 301 may be an example of apparatus 610 according to various exemplary embodiments as discussed above. It should be noted that one of ordinary skill in the art would understand that apparatus 610 may include components or features not shown in FIG. 6. Further, the apparatus 620 may be a network entity, element of the core network, or element in a communications network or associated with such a network, such as a base station, an NE, or a gNB. For example, gNB 302 may be an example of apparatus 620 according to various exemplary embodiments as discussed above. It should be noted that one of ordinary skill in the art would understand that apparatus 620 may include components or features not shown in FIG. 6. In addition, the apparatus 630 may be an element in a communications network or associated with such a network, such as a UE, RedCap UE, SL UE, mobile equipment (ME), mobile station, mobile device, stationary device, IoT device, or other device. UE 303 may be an example of apparatus 630 according to various exemplary embodiments as discussed above. It should be noted that one of ordinary skill in the art would understand that apparatus 630 may include components or features not shown in FIG. 6.

According to various exemplary embodiments, the apparatuses 610, 620, and/or 630 may include one or more processors, one or more computer-readable storage medium (for example, memory, storage, or the like), one or more radio access components (for example, a modem, a transceiver, or the like), and/or a user interface. In some exemplary embodiments, apparatuses 610, 620, and/or 630 may be configured to operate using one or more radio access technologies, such as GSM, LTE, LTE-A, NR, 5G, WLAN, WiFi, NB-IoT, Bluetooth, NFC, MulteFire, and/or any other radio access technologies.

As illustrated in the example of FIG. 6, apparatuses 610, 620, and/or 630 may include or be coupled to processors 612, 622, and 632, respectively, for processing information and executing instructions or operations. Processors 612, 622, and 632 may be any type of general or specific purpose processor. In fact, processors 612, 622, and 632 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 612 (622 and 632) for each of apparatuses 610, 620, and/or 630 is shown in FIG. 6, multiple processors may be utilized according to other example embodiments. For example, it should be understood that, in certain example embodiments, apparatuses 610, 620, and/or 630 may include two or more processors that may form a multiprocessor system (for example, in this case processors 612, 622, and 632 may represent a multiprocessor) that may support multiprocessing. According to certain example embodiments, the multiprocessor system may be tightly coupled or loosely coupled to, for example, form a computer cluster).

Processors 612, 622, and 632 may perform functions associated with the operation of apparatuses 610, 620, and/or 630, respectively, including, as some examples, precoding of antenna gain/phase parameters, encoding and decoding of individual bits forming a communication message, formatting of information, and overall control of the apparatuses 610, 620, and/or 630, including processes illustrated in FIGs. 3-5.

Apparatuses 610, 620, and/or 630 may further include or be coupled to memory 614, 624, and/or 634 (internal or external), respectively, which may be coupled to processors 612, 622, and 632, respectively, for storing information and instructions that may be executed by processors 612, 622, and 632. Memory 614 (memory 624 and 634) may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 614 (memory 624 and 634) can be comprised of any combination of random access memory (RAM), read only memory (ROM), static storage such as a magnetic or optical disk, hard disk drive (HDD), or any other type of non-transitory machine or computer readable media. The instructions stored in memory 614, memory 624, and memory 634 may include program instructions or computer program code that, when executed by processors 612, 622, and 632, enable the apparatuses 610, 620, and/or 630 to perform tasks as described herein.

In certain example embodiments, apparatuses 610, 620, and/or 630 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processors 612, 622, and 632 and/or apparatuses 610, 620, and/or 630 to perform any of the methods illustrated in FIGs. 3-5.

In some exemplary embodiments, apparatuses 610, 620, and/or 630 may also include or be coupled to one or more antennas 615, 625, and 635, respectively, for receiving a downlink signal and for transmitting via an uplink from apparatuses 610, 620, and/or 630. Apparatuses 610, 620, and/or 630 may further include transceivers 616, 626, and 636, respectively, configured to transmit and receive information. The transceivers 616, 626, and 636 may also include a radio interface (for example, a modem) respectively coupled to the antennas 615, 625, and 635. The radio interface may correspond to a plurality of radio access technologies including one or more of GSM, LTE, LTE-A, 5G, NR, WLAN, NB-IoT, Bluetooth, BT-LE, NFC, RFID, UWB, or the like. The radio interface may include other components, such as filters, converters (for example, digital-to-analog converters or the like), symbol demappers, signal shaping components, an Inverse Fast Fourier Transform (IFFT) module, or the like, to process symbols, such as OFDMA symbols, carried by a downlink or an uplink.

For instance, transceivers 616, 626, and 636 may be respectively configured to modulate information on to a carrier waveform for transmission by the antenna(s) 615, 625, and 635, and demodulate information received via the antenna(s) 615, 625, and 635for further processing by other elements of apparatuses 610, 620, and/or 630. In other example embodiments, transceivers 616, 626, and 636 may be capable of transmitting and receiving signals or data directly. Additionally or alternatively, in some example embodiments, apparatuses 610, 620, and/or 630 may include an input and/or output device (I/O device). In certain example embodiments, apparatuses 610, 620, and/or 630 may further include a user interface, such as a graphical user interface or touchscreen.

In certain example embodiments, memory 614, memory 624, and memory 634 store software modules that provide functionality when executed by processors 612, 622, and 632, respectively. The modules may include, for example, an operating system that provides operating system functionality for apparatuses 610, 620, and/or 630. The memory may also store one or more functional modules, such as an application or program, to provide additional functionality for apparatuses 610, 620, and/or 630. The components of apparatuses 610, 620, and/or 630 may be implemented in hardware, or as any suitable combination of hardware and software. According to certain example embodiments, apparatus 610 may optionally be configured to communicate with apparatus 620 and/or 630 via a wireless or wired communications links 640, 650, and/or 660 according to any radio access technology, such as NR.

According to certain example embodiments, processors 612, 622, and 632, and memory 614, 624, and 634 may be included in or may form a part of processing circuitry or control circuitry. In addition, in some example embodiments, transceivers 616, 626, and 636 may be included in or may form a part of transceiving circuitry.

For instance, in certain exemplary embodiments, the apparatus 610 may be controlled by the memory 614 and the processor 612 to initiate a radio intelligent controller subscription procedure to modify a policy of a user device, such as the apparatus 630, to change at least an operation of the user device. The apparatus 610 may also be controlled to provide to a network node, such as apparatus 620, a request to change at least the operation of the user device according to the radio intelligent controller subscription procedure.

In various exemplary embodiments, the apparatus 620 may be controlled by the memory 624 and the processor 622 to provide, to the apparatus 610, at least one measurement report including performance measurements of a user device, such as the apparatus 630. The apparatus 620 may also be controlled to receive a request to modify a policy of the user device to change at least an operation of the user device based on the measurement report. The policy may be modified and executed by the apparatus 620 to change a performance of the user device.

In some exemplary embodiments, an apparatus (e.g., apparatus 610, apparatus 620, and/or apparatus 630) may include means for performing a method, a process, or any of the variants discussed herein. Examples of the means may include one or more processors, memory, controllers, transmitters, receivers, and/or computer program code for causing the performance of the operations.

Various exemplary embodiments may be directed to an apparatus, such as apparatus 610, that includes means for performing any of the methods described herein including, for example, means for initiating a radio intelligent controller subscription procedure to modify a policy of a user device, such as the apparatus 630, to change at least an operation of the user device. The apparatus may also include the apparatus 610 to include a means for providing to an apparatus, such as apparatus 620, a request to change at least the operation of the user device according to the radio intelligent controller subscription procedure.

Various exemplary embodiments may be directed to an apparatus, such as apparatus 620, that includes means for performing any of the methods described herein including, for example, means for providing, to the apparatus 610, at least one measurement report including performance measurements of a user device, such as the apparatus 630. The apparatus 620 may also include a means for receiving a request to modify a policy of the user device to change at least an operation of the user device based on the measurement report. The apparatus 620 may further include means for modifying the policy and executing the modified policy to change a performance of the user device.

As used herein, the term "circuitry" may refer to hardware-only circuitry implementations (for example, analog and/or digital circuitry), combinations of hardware circuits and software, combinations of analog and/or digital hardware circuits with software/firmware, any portions of hardware processor(s) with software, including digital signal processors, that work together to cause an apparatus (for example, apparatus 610, 620, and/or 630) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor or multiple processors, or portion of a hardware circuit or processor, and the accompanying software and/or firmware. The term circuitry may also cover, for example, a baseband integrated circuit in a server, cellular network node or device, or other computing or network device.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (for example, apparatuses 610, 620, and/or 630), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "cell", "node", "gNB", or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

### Partial Glossary:

- 3GPP: 3rd Generation Partnership Project
- 5G: 5th Generation
- 5GCN: 5G Core Network
- CU-CP: Centralized Unit-Control Plane
- DL: Downlink
- DRB: Data Radio Bearers
- E2AP: E2 Application Protocol
- E2 Node: RAN Node supporting an E2 interface
- EMBB: Enhanced Mobile Broadband
- gNB: 5G or Next Generation NodeB
- LTE: Long Term Evolution
- RIC: Radio Intelligent Controller
- RT: Real Time
- Near-RT RIC: Near-Real Time RIC
- NR: New Radio
- O-RAN: Open Radio Access Network
- QoS: Quality of Service
- RAN: Radio Access Network
- SMO: Service Management and Orchestration
- UE: User Equipment
- UL: Uplink
- URLLC: Ultra Reliable Low Latency Communication

## Claims

1. A method comprising:
initiating, by a network device (610), a radio intelligent controller subscription procedure to modify a policy of a user device (630) to change at least an operation of the user device (630); and
providing, by the network device (610) to a network node (620), a request to change at least the operation of the user device (630) according to the radio intelligent controller subscription procedure.

2. The method according to claim 1, wherein the radio intelligent controller subscription procedure is initiated when determining that the user device (630) is not underperforming or overperforming based on a target performance metric.

3. The method according to claim 1 or claim 2, wherein the request instructs the network node (620) to add or remove the user device (630) to a list of devices causing the user device (630) to operate by modified operations.

4. The method according to any one of claims 1-3, further comprising:
receiving, by the network device (610) from the network node (620), at least one measurement report comprising performance measurements for the user device (630).

5. The method according to claim 4, wherein the radio intelligent controller subscription procedure is initiated in response to the performance measurements of the measurement report indicating that the user device (630) is underperforming.

6. The method according to any one of claims 2-5, wherein the radio intelligent controller subscription procedure is iteratively performed until the user device (630) is removed from the list of devices to operate by modified operations and the user device (630) returns to a normal operation.

7. A method, comprising:
providing, to a network device (610) from a network node (620), at least one measurement report comprising performance measurements of a user device (630);
receiving, from the network device (610), a request to modify a policy of the user device (630) to change at least an operation of the user device (630) based on the measurement report; and
modifying the policy and executing the modified policy to change a performance of the user device (630).

8. The method according to claim 7, wherein the request comprises instructions to the network node (620) to add the user device (630) to a list of devices to operate by modified operations.

9. The method according to claim 8, wherein the modified policy is executed until the user device (630) is removed from the list of devices to operate by modified operations and the user device (630) returns to a normal operation.

10. The method according to claim 8 or claim 9, further comprising:
providing, from the network node (620) to the network device (610), an acknowledgement message indicating that the user device (630) has been added to the list of devices to operate by modified operation.

11. The method according to any one of claims 7-10, wherein the modifying of the policy comprises modifying the operation of the user device (630) to change the performance of the user device (630).

12. An apparatus (610) comprising:
at least one processor (612); and
at least one memory (614) storing instructions that, when executed by the at least one processor (612), cause the apparatus (610) at least to:
initiate a radio intelligent controller subscription procedure to modify a policy of a user device (630) to change at least an operation of the user device (630); and
provide, to a network node (620), a request to change at least the operation of the user device (630) according to the radio intelligent controller subscription procedure.

13. The apparatus (610) according to claim 12, wherein the radio intelligent controller subscription procedure is initiated when determining that the user device (630) is not underperforming or overperforming based on a target performance metric.

14. The apparatus (610) according to claim 12 or claim 13, wherein the request instructs the network node (620) to add or remove the user device (630) to a list of devices causing the user device (630) to operate by modified operations.

15. The apparatus (610) according to any one of claims 12-14, wherein the apparatus (610) is further caused to:
receive, from the network node (620), at least one measurement report comprising performance measurements for the user device (630).

16. The apparatus (610) according to claim 15, wherein the radio intelligent controller subscription procedure is initiated in response to the performance measurements of the measurement report indicating that the user device (630) is underperforming.

17. An apparatus (620) comprising:
at least one processor (622); and
at least one memory (624) storing instructions that, when executed by the at least one processor (622), cause the apparatus (620) at least to:
provide, to a network device (610), at least one measurement report comprising performance measurements of a user device (630);
receive, from the network device (610), a request to modify a policy of the user device (630) to change at least an operation of the user device (630) based on the measurement report; and
modify the policy and executing the modified policy to change a performance of the user device (630).

18. The apparatus (620) according to claim 17, wherein the request comprises instructions to the apparatus (620) to add the user device (630) to a list of devices to operate by modified operations.

19. The apparatus (620) according to claim 18, wherein the modified policy is executed until the user device (630) is removed from the list of devices to operate by modified operations and the user device (630) returns to a normal operation.

20. The apparatus (620) according to claim 18 or claim 19, wherein the apparatus (620) is further caused to:
provide, to the network device (610), an acknowledgement message indicating that the user device (630) has been added to the list of devices to operate by modified operation.
